# EUROPÄISCHE PATENTSCHRIFT

(11) **EP 1 682 376 B1**
(45) Veröffentlichungstag und Bekanntmachung des Hinweises auf die Patenterteilung: **02.01.2008**
(21) Anmeldenummer: 04802726.2
(22) Anmeldetag: 12.11.2004
(51) Int. Cl.: B60K 15/04, B60K 15/05

(54) **VERSCHLUSSEINRICHTUNG FÜR EINE TANKZUGANGSÖFFNUNG, INSBESONDERE FÜR TANKSTUTZEN IN KRAFTFAHRZEUGEN**
SEALING DEVICE FOR A TANK ACCESS OPENING IN PARTICULAR FOR TANK FILLER PIPES ON MOTOR VEHICLES
DISPOSITIF DE FERMETURE POUR UNE OUVERTURE D'ACCES A UN RESERVOIR, EN PARTICULIER POUR DES TUBULURES DE REMPLISSAGE DE RESERVOIR DANS DES VEHICULES AUTOMOBILES

(30) Priorität: 12.11.2003 DE 10352767
(43) Veröffentlichungstag der Anmeldung: 26.07.2006
(73) Patentinhaber: Schefenacker-Engelmann Spiegel GmbH, 71409 Schwaikheim (DE)
(72) Erfinder: BULTMANN, Etzhard, 30900 Wedemark (DE); EKENHORST, Derk, 30900 Wedemark (DE)
(74) Vertreter: Stornebel, Kai
(86) Internationale Anmeldenummer: PCT/DE2004/002510
(87) Internationale Veröffentlichungsnummer: WO 2005/047041

(56) Entgegenhaltungen:
- EP-A- 1 132 247
- DE-A1- 4 239 572
- DE-U1- 20 309 799
- US-A- 5 547 099

## Beschreibung

Die Erfindung betrifft eine Verschlußeinrichtung für eine Tankzugangsöffnung, insbesondere für Tankstutzen in Kraftfahrzeugen.

Tankstutzen werden gemäß dem Stand der Technik über Schraubverschlüsse verschlossen, die ggf. abschließbar ausgebildet sind. Solche Tankverschlüsse sind unhandlich, können verloren gehen und führen insbesondere bei Fahrzeugen mit Dieselmotoren zu einer verstärkten Verschmutzung der Hände eines Fahrzeugnutzers beim Betanken des Fahrzeuges.

Ein Tankstutzen gemäß dem Oberbegriff des Anspruchs 1 ist z.B. bekannt aus EP-1 132 247.

Aufgabe der vorliegenden Erfindung ist es, eine Verschlußeinrichtung für eine Tankzugangsöffnung bereitzustellen, die komfortabel zu bedienen ist und dennoch eine sichere Abdichtung gewährleistet.

Erfindungsgemäß wird diese Aufgabe durch eine Verschlußeinrichtung für eine Tankzugangsöffnung mit den Merkmalen des Anspruchs 1 gelöst, bei der innerhalb der Tankzugangsöffnung eine Kugel verschieblich dergestalt gelagert ist, dass bei Einführen einer Zapfpistole die Kugel die Tankzugangsöffnung freigibt. Durch die Innenlagerung einer Kugel wird ein Schraubverschluß überflüssig, zudem wirkt die Abdichtung durch eine Kugel selbstverstärkend, wenn innerhalb des Tankstutzens ein Überdruck herrscht.

Eine Weiterbildung der Erfindung sieht vor, dass die Kugel auf einer Bahn gelagert ist, die in einem spitzen Winkel zur Einführrichtung der Zapfpistole und damit zur Längserstreckung des Tankstutzens ausgerichtet ist. Die Ausrichtung in einem spitzen Winkel hat zur Folge, dass bei einem Einführen der Zapfpistole in den Tankstutzen eine Querkraftkomponente auf die Kugel ausgeübt wird, so dass die Kugel aus der Bewegungsrichtung der Zapfpistole herausgeschoben wird.

Zur Sicherstellung einer präzisen Führung und exakten Zuordnung der Kugel zu der Tankzugangsöffnung ist es vorgesehen, dass die Kugel in eine Hülse geführt ist, wobei die Hülse so ausgebildet ist, dass die Zapfpistole ungehindert in den Tankstutzen eindringen kann, also dass auf der Unterseite der Hülse in Richtung auf den Tankstutzen eine Ausnehmung vorhanden ist.

Zur sicheren, insbesondere gasdichten Abdichtung der Zugangsöffnung ist es vorgesehen, dass ein Dichtungsring an der Zugangsöffnung angeordnet ist, an dem die Kugel in der Verschlußstellung anliegt. Die Dichtung ist vorzugsweise als ein O-Ring ausgebildet.

Der Kugeldurchmesser ist vorzugsweise größer als der Durchmesser der Tankzugangsöffnung, damit eine sichere und formschlüssige Verriegelung der Tankzugangsöffnung durch die Kugel gewährleistet ist. Der Kugeldurchmesser ist vorteilhafter Weise auch größer als der Durchmesser der Zapfpistole, damit die Kugel bei einem Aufsetzen der Zapfpistole und Ausübung eines Druckes nicht in der Zapfpistole verhakt oder durch diese blockiert wird.

Zur Sicherstellung eines wirksamen Verschlusses ist die Kugel in Richtung der Tankzugangsöffnung kraftbeaufschlagt, insbesondere federbelastet, wobei die Feder vorzugsweise als eine Druckfeder ausgebildet ist. Alternative Kraftbeaufschlagungseinrichtungen können vorgesehen sein, beispielsweise durch ein an einem Hebel angeordnetes Gewicht oder andere Kraftspeichereinrichtungen.

Um im Falle eines Unfalles oder anderweitig verursachter Beschleunigungskräfte, die Kugel sicher in der Verschlußstellung zu halten, ist ein Massenausgleichsgewicht der Kugel zugeordnet, das so ausgebildet und angeordnet ist, dass die Tankzugangsöffnung allein aufgrund einer Beschleunigungsbewegung ohne Aufbringen einer Druckkraft über eine Zapfpistole nicht geöffnet wird. Dazu ist es vorgesehen, dass das Massenausgleichsgewicht über einen Hebel bzw. eine Hebelanordnung mit der Kugel gekoppelt ist, wobei durch eine Veränderung der Hebelarme das notwendige, absolute Gewicht des Massenausgleichgewichtes verringert werden kann.

Vorteilhafter Weise ist die Verschlußeinrichtung als ein vormontierbares Modul ausgebildet, das auf einem Tankstutzen festlegbar ist, so dass dieses Modul im Rahmen der Endmontage lediglich auf dem Tankstutzen aufgesetzt und an diesem gasdicht befestigt werden muss.

Nachfolgend wird ein Ausführungsbeispiel der Erfindung anhand der beigefügten Figuren näher erläutert. Es zeigen:
- Figur 1: eine schematische Darstellung einer Verschlußeinrichtung im Verschlußzustand; sowie
- Figur 2: eine Verschlußeinrichtung gemäß Figur 1 im Betankungszustand.

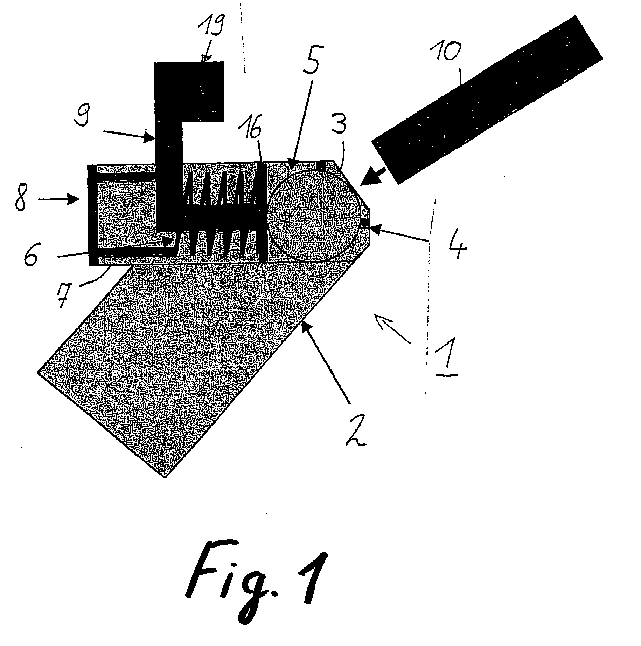

Figur 1 zeigt in schematischer Darstellung eine Schnittansicht einer Verschlußeinrichtung 1 eines Tankstutzens 2, der eine Tankzugangsöffnung 3 aufweist. Um die Tankzugangsöffnung 3 herum ist ein Dichtring 4 angeordnet, der als O-Ring ausgebildet ist. Die Tankzugangsöffnung 3 wird durch eine Kugel 5 verschlossen, die über eine Feder 6 gegen die Dichtung 4 gedrückt wird und den Tankstutzen 2 gasdicht abschließt.

Die Kugel 3 ist in einer Hülse 7 geführt, die durch eine Verschlußkappe 8 verschlossen ist. Die Kappe 8 dient zur Zugänglichmachung und der Montierbarkeit der Verschlußeinrichtung 1. Die Hülse 7 ist die in einem spitzen Winkel α zur Einführrichtung einer Zapfpistole 10 und damit zur Längserstreckung des Tankstutzens 2 ausgerichtet und bewirkt beim Einführen der Zapfpistole 10 ein Verschieben der Kugel 5 aus der Verschlußstellung entlang der Hülse 7. Damit wird der Tankstutzen 2 zum Betanken freigegeben.

In der Figur 1 ist die Feder 6 als eine Druckfeder ausgebildet, die über einen Schieber 16 die Kugel 5 in Richtung auf die Tankzugangsöffnung 3 belastet. Der Schieber 16 ist mit einem Hebel 9 gekoppelt, der drehbar gelagert ist, wobei sich an dem dem Schieber 16 gegenüberliegenden Ende des Hebels 9 ein Ausgleichsgewicht 19 befindet, das im Falle eines Unfalles die Funktion hat, die Kugel 3 in der geschlossenen Position zu halten, indem Massenbeschleunigungskräfte ausgeglichen werden.

Zum Betanken wird eine Zapfpistole 10 in die Tankzugangsöffnung 3 eingeführt und gegen die Kugel 5 gedrückt, die entlang der Hülse 7 verschoben wird und einen Durchgang zu dem Tankstutzen 2 freigibt. Die eingeführte Zapfpistole 10 hält die Kugel 5 gegen den Federdruck der Feder 6 in einer geöffneten Stellung.

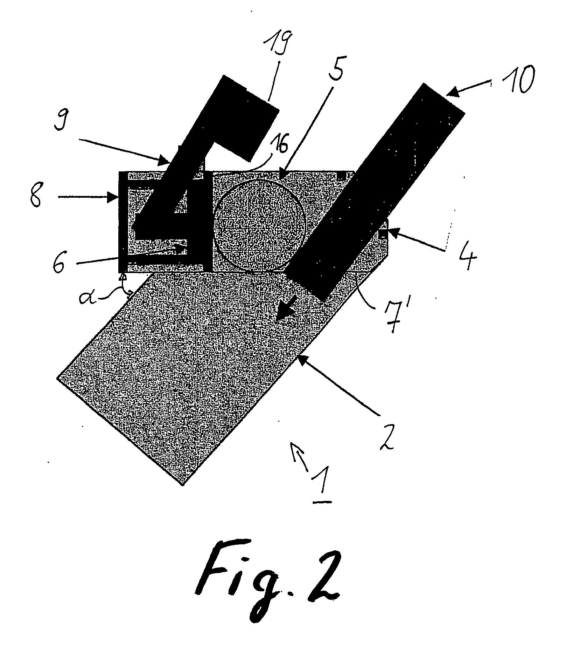

In der Figur 2 ist diese Position dargestellt, bei der die Zapfpistole 10 durch die Tankzugangsöffnung 3 eingeführt ist. Die Druckfeder 6 ist komprimiert und das Massenausgleichgewicht 19 ist über den Hebel 9 in Richtung auf die Zapfpistole 10 verschwenkt. Die Hülse 7 weist im Bereich der Tankzugangsöffnung 3 eine Ausnehmung 7' auf, durch die die Zapfpistole 10 hindurchtreten kann, wobei die Durchgangsöffnung 7' kleiner als der Durchmesser der Kugel 5 ist.

Nach Abschluß des Tankvorganges wird die Zapfpistole 10 aus dem Tankstutzen 2 herausgezogen und durch die Tankzugangsöffnung 3 entfernt. Die Feder 6 entspannt sich und drückt die Kugel 5 entlang der Hülse 7 in Richtung auf die Dichtung 4 und schließt die Tankzugangsöffnung 3 gasdicht ab. Aufgrund der Langsamkeit der Bewegung beim Öffnen und Schließen der Tankzugangsöffnung wirkt das Massenausgleichsgewicht 19 nur minimal entgegen einer Verschiebekraft und stört daher nicht beim Tankvorgang.

Vorteilhafter Weise ist die Verschlußeinrichtung 1 als ein Modul ausgebildet, das auf einen Tankstutzen 2 aufsetzbar ist. Die gesamte dargestellte Verschlußeinrichtung 1 kann somit vormontiert und im Rahmen der Endmontage auf einen Tankstutzen 2 eines eingebauten Kraftstofftankes aufgesetzt werden.

## Patentansprüche

1. Tankstutzen mit einer Verschlußeinrichtung der Tankzugangsöffnung, insbesondere in Kraftfahrzeugen, **dadurch gekennzeichnet, dass** innerhalb der Tankzugangsöffnung (3) eine Kugel (5) verschieblich dergestalt gelagert ist, dass bei Einführen einer Zapfpistole (10) die Kugel (5) die Tankzugangsöffnung (3) freigibt.

2. Tankstutzen nach Anspruch 1, **dadurch gekennzeichnet, dass** die Kugel (5) auf einer Bahn gelagert ist, die in einem spitzen Winkel (α) zu der Einführrichtung der Zapfpistole (10) ausgebildet ist.

3. Tankstutzen nach Anspruch 1 oder 2, **dadurch gekennzeichnet, dass** die Kugel (5) in einer Hülse (7) geführt ist.

4. Tankstutzen nach einem der voranstehenden Ansprüche, **dadurch gekennzeichnet, dass** ein Dichtungsring (4) an der Zugangsöffnung (3) angeordnet ist, an dem die Kugel (5) in einer Verschlußstellung anliegt.

5. Tankstutzen nach einem der voranstehenden Ansprüche, **dadurch gekennzeichnet, dass** der Kugeldurchmesser größer als der Durchmesser der Tankzugangsöffnung (3) ist.

6. Tankstutzen nach einem der voranstehenden Ansprüche, **dadurch gekennzeichnet, dass** die Kugel (5) in Richtung auf die Tankzugangsöffnung (3) kraftbeaufschlagt, insbesondere federbelastet ist.

7. Tankstutzen nach einem der voranstehenden Ansprüche, **dadurch gekennzeichnet, dass** ein Massenausgleichsgewicht (19) der Kugel (5) zum Ausgleich von Beschleunigungskräften zugeordnet ist.

8. Tankstutzen nach Anspruch 7, **dadurch gekennzeichnet, dass** das Massenausgleichsgewicht (19) über einen Hebel (9) mit der Kugel (5) gekoppelt ist.

9. Tankstutzen nach einem der voranstehenden Ansprüche, **dadurch gekennzeichnet, dass** die Verschlußeinrichtung (1) als ein Modul ausgebildet ist, das auf dem Tankstutzen (2) befestigbar ist.

## Claims

1. A tank filler neck having a sealing device of the tank access opening, in particular in a motor vehicle, **characterized in that** a ball (5) is displaceably supported inside the tank access opening (3) in such a way that on introduction of a nozzle (10) the ball (5) opens the tank access opening (3).

2. A. tank filler neck according to claim 1, **characterized in that** the ball (5) is supported on a guideway, which is aligned at an acute angle (α) to the direction of insertion of the nozzle (10)

3. A tank filler neck according to claim 1 or 2, **characterized in that** the ball (5) is guided in a sleeve (7).

4. A tank filler neck according to any one of the preceding claims, **characterized in that** a sealing ring (4), against which the ball (5) rests in a sealing position, is arranged at the access opening (3).

5. A tank filler neck according to any one of the preceding claims, **characterized in that** the ball diameter is greater than the diameter of the tank access opening (3).

6. A tank filler neck according to any one of the preceding claims, **characterized in that** the ball (5) is acted upon by a force and in particular spring-loaded in the direction of the tank access opening (3).

7. A tank filler neck according to any one of the preceding claims, **characterized in that** a counterweight (19) is assigned to the ball (5) to compensate for acceleration forces.

8. A tank filler neck according to claim 7, **characterized in that** the counterweight (19) is coupled to the ball (5) by way of a lever (9).

9. A tank filler neck according to any one of the preceding claims, **characterized in that** the sealing device (1) takes the form of a module, which can be fixed to the tank filler neck (2).

## Revendications

1. - Embout de réservoir comportant un dispositif de fermeture de l'ouverture d'accès au réservoir, **caractérisé en ce qu'**à l'intérieur de l'ouverture (3) d'accès au réservoir une sphère (5) est montée mobile de telle sorte que lors de l'introduction d'un pistolet de distribution (10) la sphère (5) libère l'ouverture (3) d'accès au réservoir.

2. - Embout de réservoir, selon la revendication 1, **caractérisé en ce que** la 10 sphère (5) est montée sur un chemin qui forme un angle aigu (a) par rapport à la direction d'introduction du pistolet de distribution (10).

3. - Embout de réservoir, selon la revendication 1 ou 2, **caractérisé en ce que** la sphère (5) est guidée dans un manchon (7).

4. - Embout de réservoir, selon l'une des revendications précédentes, **caractérisé en ce qu'**un anneau d'étanchéité (4) est disposé sur l'ouverture d'accès (3) sur lequel s'appuie la sphère (5) dans une position de fermeture.

5. Embout de réservoir, selon l'une des revendications précédentes, **caractérisé en ce que** le diamètre de la sphère est supérieur au diamètre de l'ouverture d'accès (3) au réservoir.

6. - Embout de réservoir, selon l'une des revendications précédentes, **caractérisé en ce que** la sphère (5) est sollicitée dans la direction de l'ouverture d'accès (3) au réservoir par une force, en particulier par la force d'un ressort.

7. - Embout de réservoir, selon l'une des revendications précédentes, **caractérisé en ce qu'**un poids d'équilibrage de masse (19) est associé à la sphère (5) pour équilibrer les forces d'accélération.

8. - Embout de réservoir, selon la revendication 7, **caractérisé en ce que** le poids d'équilibrage de masse (19) est accouplé à la sphère (5) au moyen d'un levier (9).

9. - Embout de réservoir, selon l'une des revendications précédentes, **caractérisé en ce que** le dispositif de fermeture (1) est réalisé sous la forme d'un module qui peut être fixé sur l'embout de réservoir (2).
